(19) **Europäisches Patentamt**

**European Patent Office**

**Office européen des brevets**

(11) Veröffentlichungsnummer: **0 292 983**

**A1**

(12) **EUROPÄISCHE PATENTANMELDUNG**

(21) Anmeldenummer: **88108476.8**

(22) Anmeldetag: **27.05.88**

(51) Int. Cl.⁴: **F02M 31/20 , F02M 37/20**

(30) Priorität: **29.05.87 DE 3718088**

(43) Veröffentlichungstag der Anmeldung:
**30.11.88 Patentblatt 88/48**

(84) Benannte Vertragsstaaten:
**ES**

(71) Anmelder: **AUDI AG**
**Postfach 220**
**D-8070 Ingolstadt(DE)**

(72) Erfinder: **Pabst, Hans-Georg**
**Robert-Koch-Strasse 2**
**D-8074 Gaimersheim(DE)**

(74) Vertreter: **Engelhardt, Harald**
**Audi AG Postfach 2 20**
**D-8070 Ingolstadt(DE)**

(54) **Kraftstoffördereinrichtung für Kraftfahrzeuge.**

㊳ Bei einer Kraftstoffördereinrichtung für Kraftfahrzeuge, insbesondere Kraftstoffeinspritzanlage für Benzinmotoren, mit einer im Bereich des Kraftstofftankes angeordneten kontinuierlich fördernden Kraftstoffpumpe (14), einer von der Kraftstoffpumpe (14) zu den Einspritz- oder Vergaserdüsen (22) der Brennkraftmaschine führenden Kraftstoffförderleitung (16) sowie einer den jeweils nicht benötigten Kraftstoff zurück zu dem Kraftstofftank (10) leitenden Rückführleitung (26) mit einem vorzugsweise im Bereich der Rückführleitung (26) angeordneten Wärmetauscher (28), mit welchem eine Kühlung des geförderten bzw. rückgeführten Kraftstoffes erfolgt, ist im Hinblick auf eine einfache Bauweise und Anwendbarkeit bei beliebigen Kraftfahrzeugen vorgesehen, daß der die Kühlung des Kraftstoffes durchführende Wärmetauscher (28) im Bereich der Einspritz- und der Vergaserdüsen (22) angeordnet ist.

**EP 0 292 983 A1**

## Kraftstofffördereinrichtung für Kraftfahrzeuge

Die Erfindung bezieht sich auf eine Kraftstofffördereinrichtung für Kraftfahrzeuge gemäß dem Oberbegriff des Anspruchs 1.

Die Brennkraftmaschinen von Kraftfahrzeugen werden heutzutage vielfach mit einer Einspritzanlage versehen, weil auf diese Weise in den unterschiedlichsten Betriebsbedingungen des Kraftfahrzeugs eine optimalere Einstellung des erforderlichen Kraftstoff/Luft-Gemisches möglich ist, wodurch einerseits der Kraftstoffverbrauch des jeweiligen Kraftfahrzeugs verringert werden kann, andererseits eine bessere Einhaltung vorgegebener Werte der Schadstoffemission möglich erscheint.

Bei mit einer Kraftstoffeinspritzanlage versehenen Brennkraftmaschinen von Kraftfahrzeugen ist in der Regel im Bereich des vorgesehenen Kraftstofftankes eine kontinuierlich fördernde elektrische Kraftstoffpumpe vorgesehen, mit welcher der innerhalb des Kraftstofftankes befindliche Kraftstoff über eine Förderleitung der im Bereich der Brennkraftmaschine befindlichen Einspritzanlage zugeführt wird, von welcher aus der Kraftstoff in genau dosierten Mengen über Einspritzleitungen den verschiedenen Einspritzdüsen zugeleitet wird, die sich im Bereich der zu den verschiedenen Zylindern der Brennkraftmaschine führenden Saugrohren befinden. Der für den Betrieb der Brennkraftmaschine nicht benötigte Teil des von der Kraftstoffpumpe geförderten Kraftstoff wird dann über eine entsprechende Rückführleitung von der Einspritzanlage zurück in den Kraftstofftank geleitet.

Da die von der Brennkraftmaschine eines Kraftfahrzeugs benötigte Kraftstoffmenge entsprechend den jeweiligen Betriebsbedingungen des Kraftfahrzeugs starken Schwankungen ausgesetzt ist, muß die im Bereich des Kraftstofftanks vorgesehene Kraftstoffpumpe für den maximal möglichen momentanen Kraftstoffverbrauch ausgelegt sein, was in der Regel eine Förderleistung der Kraftstoffpumpe von etwa 200 Watt erforderlich macht. Da im Normalbetrieb eines Kraftfahrzeugs nur ein Bruchteil dieser Förderleistung erforderlich ist, werden über die Rückführleistung pro Stunde bis zu 170 Liter Kraftstoff zurück in den Kraftstofftank gepumpt, wobei es zu einer gewissen Erwärmung des im Kreislauf geführten Kraftstoffes kommt. Unter Extrembedingungen kann dies dazu führen, daß in der Ansaugleitung zwischen Kraftstofftank und elektrischer Kraftstoffpumpe Gasblasen entstehen, wodurch die Förderwirkung der Kraftstoffpumpe stark eingeschränkt bzw. unwirksam gemacht wird, was wiederum den ordnungsgemäßen Betrieb der Brennkraftmaschine verhindert.

Bei mit einer Klimaanlage versehenen Kraftfahrzeugen ist es demzufolge bereits bekannt, im Bereich der zu dem Kraftstofftank führenden Rückführleitung einen Wärmetauscher vorzusehen, welcher von der Klimaanlage her gespeist wird, so daß auf diese Weise eine Kühlung des durch die Kraftstoffpumpe und/oder die Einspritzanlage erwärmten Kraftstoffes erreicht wird. Es ist jedoch einleuchtend, daß eine derartige Maßnahme einen relativ hohen technischen Aufwand erfordert und zudem den Energieverbrauch des Kraftfahrzeugs weiter erhöht, weil die zum Betrieb des Wärmetauschers erforderliche Kühlleistung dem von der Brennkraftmaschine entwickelten Energiekreis entnommen werden muß. Darüber hinaus ist eine derartige Maßnahme nur bei jenen Kraftfahrzeugen anwendbar, welche mit einer zusätzlichen Klimaanlage versehen sind und nur beim Betrieb der Klimaanlage arbeitet.

Es ist daher Aufgabe der vorliegenden Erfindung, die Kraftstofffördereinrichtung der eingangs genannten Art dahingehend weiterzubilden, daß bei relativ geringem technischen Aufwand eine zufriedenstellende Kühlung des von dem Kraftstofftank mit Hilfe einer Kraftstoffpumpe geförderten Kraftstoffes erreicht werden kann, ohne daß dabei der Energieverbrauch des jeweiligen Kraftfahrzeugs weiter erhöht wird.

Diese Aufgabe wird durch die im Anspruch 1 gekennzeichnete Erfindung gelöst.

Die vorliegende Erfindung geht dabei von dem Gedanken aus, daß bei der Aufbereitung des Kraftstoff/Luft-Gemisches feine Kraftstofftröpfchen zum Verdampfen gebracht werden, wobei eine gewisse Verdampfungswärme erforderlich ist, die der jeweiligen Umgebung entzogen werden muß. Dies führt zwangsläufig zu einer gewissen Abkühlung jener Motorbereiche, in welchen die Verdampfung der innerhalb des Luftstromes sich befindlichen Kraftstofftröpfchen erfolgt. Diese ganz zwangsläufig im Bereich der Saugrohre einer Brennkraftmaschine bzw. des Vergasers sich ergebende Abkühlung wird nunmehr im Rahmen der vorliegenden Erfindung zur Abkühlung des von der Kraftstoffpumpe geförderten bzw. über die Rückführleitung zurück zu dem Kraftstofftank geführten Kraftstoffes benützt, so daß eine ungewünschte Blasenbildung innerhalb des Ansaugrohres zwischen Kraftstofftank und Kraftstoffpumpe mit Sicherheit vermieden werden kann. Die zur Abkühlung des geförderten Kraftstoffes erforderliche Kühlleistung wird dabei an einer Stelle entnommen, an welcher sie ohne besondere Maßnahmen bereits zur Verfügung steht, so daß auf diese Weise der Energiebedarf des Kraftfahrzeugs nicht zusätzlich erhöht wird.

Vorteilhafte Ausgestaltungen der Erfindung ergeben sich aus den Unteransprüchen.

Im Hinblick auf eine einfache Bauweise kann der Wärmetauscher im wesentlichen ein Rohr sein, welches spiralförmig außerhalb und/oder innerhalb des Saugrohres angeordnet ist, in dem die Verdampfung des durch entsprechende Düsen eingeleiteten Kraftstoffes erfolgt.

Im Fall eines Einspritzmotors, bei welchem zu jedem einzelnen Zylinder ein getrenntes Saugrohr führt, in das über eine Einspritzdüse das Einspritzen des Kraftstoffes erfolgt, kann das den Wärmetauscher bildende Rohr entsprechend der durch die Auslegung der Kraftstoffpumpe erforderlichen Kühlleistung um zwei oder mehrere Saugrohre auf der Einlaßseite der mehrzylindrischen Brennkraftmaschine geschlungen sein, um auf diese Weise bei geringem technischen Aufwand den Kraftstoff in ausreichender Weise abkühlen zu können.

Schließlich besteht die Möglichkeit, daß das den Wärmetauscher bildende Rohr unmittelbar Teil der zu dem Kraftstofftank führenden Rückführleitung ist, wodurch die Anzahl der erforderlichen Bauteile gering gehalten werden kann.

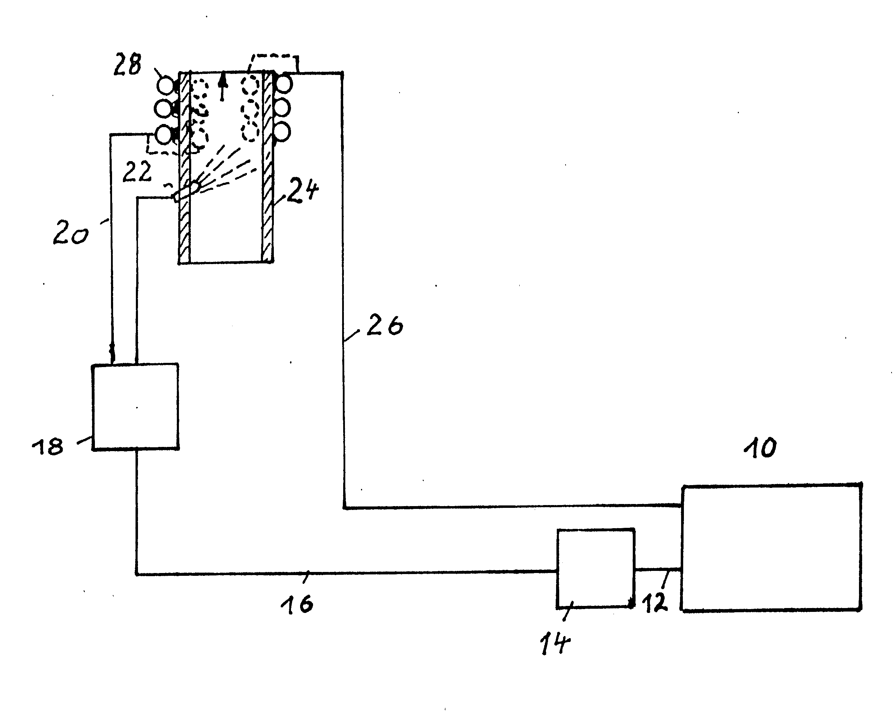

Ein Ausführrugnsbeispiel der Erfindung ist in der einzigen Figur schematisch dargestellt und soll in dem Folgenden näher beschrieben werden.

Die Figur zeigt schematisch den Kraftstofftank 10 eines Kraftfahrzeugs, von welchem eine Saugleitung 12 zu einer kontinuierlich fördernden elektrischen Kraftstoffpumpe 14 führt. Von dieser Kraftstoffpumpe 14 führt eine Kraftstofförderleitung 16 zu einer Kraftstoffeinspritzanlage 18, von welcher eine Einspritzleitung 20 zu einer Einspritzdüse 22 führt, die in das zu dem jeweiligen Zylinder der Brennkraftmaschine führende Saugrohr 24 eingesetzt ist. Entsprechend der Anzahl von vorgesehenen Zylindern sind parallel zu der Einspritzleitung 20,der Einspritzdüse 22 und dem Saugrohr 24 weitere nicht dargestellte Einspritzleitungen, Einspritzdüsen und Saugrohre vorgesehen. Die für den jeweiligen Betrieb der Brennkraftmaschine nicht benötigte Kraftstoffmenge wird von der Kraftstoffeinspritzanlage 18 über eine Rückführleitung 26 zurück in den Kraftstofftank 10 geleitet.

Im Rahmen der vorliegenden Erfindung ist die Rückführleitung 26 mehrmals um das Saugrohr 24 im Verdampfungsbereich des durch die Einspritzdüse 22 eingesprühten Kraftstoffes gewickelt und beispielsweise durch Verlöten an dem betreffenden Saugrohr 24 befestigt, so daß auf diese Weise durch das Saugrohr 24 und den um das Saugrohr 24 gewickelten Bereich der Rückführleitung 26 ein Wärmetauscher 28 gebildet wird. Die Rückführleitung 26 kann ebenfalls spiralförmig innerhalb des Saugrohres 24 oder sowohl außerhalb und innerhalb des Saugrohres 24 angeordnet sein, wie dies mittels gestrichelter Linien in der Figur dargestellt ist.

Die Funktionsweise der beschriebenen Anordnung ist wie folgt: Während des Betriebs der Brennkraftmaschine wird mit Hilfe der kontinuierlich arbeitenden Kraftstoffpumpe 14 über die Saugleitung 12 Kraftstoff aus dem Kraftstofftank 10 angesaugt und über die Kraftstofförderleitung 16 der Kraftstoffeinspritzanlage 18 zugeführt. Diese Kraftstoffeinspritzanlage 18 führt den Kraftstoff über die verschiedenen Einspritzleitungen 20 zu den Einspritzdüsen 22, so daß innerhalb der entsprechenden Saugrohre 24 die gewünschte Verdampfung des in kleinen Flüssigkeitströpfchen eingesprühten Kraftstoffes und Vermengung desselben mit der durch die entsprechenden Saugrohre 24 zugeführten Luft erfolgt.

Aufgrund des innerhalb der Saugrohre 24 sich ergebenden Verdampfungsvorgangs wird der Umgebung eine entsprechende Menge von Verdampfungswärme entzogen, so daß sich die einzelnen Saugrohre 24 der Brennkraftmaschine abkühlen. Der von der Kraftstoffeinspritzanlage 18 über die Rückführleitung 26 zurück in den Kraftstofftank 10 geleitete überschüssige Brennstoff wird demzufolge mit Hilfe des vorgesehenen Wärmetauschers 28 abgekühlt, so daß auch bei längerem Betrieb der Brennkraftmaschine durch zu starke Erwärmung des Kraftstoffes aufgrund der durch die elektrische Kraftstoffpumpe 14 und eventuell zusätzlich der Kraftstoffeinspritzanlage 18 zugeführten Energie innerhalb der zwischen Kraftstofftank 10 und Kraftstoffpumpe 14 befindlichen Saugleitung 12 keine Gasblasen auftreten , die die Wirksamkeit der Kraftstoffpumpe 14 nachteilig beeinflussen könnten.

Während in der Figur die Rückführleitung 26 allein an einem einzelne Saugrohr 24 dargestellt ist, so erscheint es einleuchtend, daß bei einer mehrzylindrischen Brennkraftmaschine die Rückführleitung 26 ebenfalls an mehreren Saugrohren 24 angeordnet sein kann, falls die innerhalb eines einzigen Saugrohres 24 sich ergebende Kühlleistung zur Abkühlung des in einem Kreislauf geförderten Kraftstoffes nicht ausreichend sein sollte.

Das Prinzip der Kraftstoffkühlung durch Ausnutzung der Verdampfungswärme des Kraftstoffes ist ebenfalls bei Vergasermotoren anwendbar, um auf diese Weise beispielsweise sich ergebende Heißstartschwierigkeiten zu vermeiden.

## Ansprüche

1. Kraftstofffördereinrichtung für Kraftfahrzeuge, insbesondere Kraftstoffeinspritzanlagen für Benzinmotoren, mit einer im Bereich des Kraftstofftanks angeordneten kontinuierlich fördernden Kraftstoffpumpe, einer von der Kraftstoffpumpe zu den Einspritz- oder Vergaserdüsen der Brennkraftmaschine führenden Kraftstofförderleitung sowie einer den jeweils nicht benötigten Kraftstoff zurück zu dem Kraftstofftank leitenden Rückführleitung, wobei vorzugsweise im Bereich der Rückführleitung ein Wärmetauscher vorgesehen ist, mit welchem eine Kühlung des geförderten bzw. rückgeführten Kraftstoffes erfolgt, dadurch gekennzeichnet, daß der die Kühlung des Kraftstoffes durchführende Wärmetauscher (28) im Bereich der Einspritz- oder Vergaserdüsen (22) angeordnet ist.

2. Kraftstofffördereinrichtung nach Anspruch 1, dadurch gekennzeichnet , daß der Wärmetauscher (28) im wesentlichen ein Rohr ist, welches spiralförmig außerhalb und/oder innerhalb des Saugrohres (24) angeordnet ist, in dem die Verdampfung des durch entsprechende Düsen (22) eingeleiteten Kraftstoffes erfolgt.

3. Kraftstofffördereinrichtung nach Anspruch 2, dadurch gekennzeichnet, daß im Fall eines Einspritzmotors, bei welchem zu jedem einzelnen Zylinder ein getrenntes Saugrohr(24)führt, in das über eine Einspritzdüse (22) das Einspritzen des Kraftstoffes erfolgt, das den Wärmetauscher(28) bildende Rohr entsprechend der durch die Auslegung der Kraftstoffpumpe (14) erforderlichen Kühlleistung an zwei oder mehreren Saugrohren auf der Einlaßseite der mehrzylindrischen Brennkraftmaschine angeordnet ist.

4. Kraftstofffördereinrichtung nach Anspruch 2 oder 3, dadurch gekennzeichnet, daß das den Wärmetauscher (28) bildende Rohr unmittelbar Teil der zu dem Kraftstofftank (10) führenden Rückführleitung (26) bildet.

0 292 983

# EUROPÄISCHER RECHERCHENBERICHT

**Europäisches Patentamt**

**Nummer der Anmeldung**

EP 88 10 8476

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 593 694  (S.G. HILBORN)<br>* Spalte 1, Zeilen 32-71; Spalte 4, Zeile 42 - Spalte 7, Zeile 20; Figuren 1,3 *<br>--- | 1-4 | F 02 M  31/20<br>F 02 M  37/20 |
| X | DE-A-3 024 846  (DAIMLER-BENZ AG )<br>* Seite 8, Zeile 6 - Seite 10, Zeile 12; Figuren 1-3 *<br>--- | 1 | |
| A | US-A-2 994 311  (W.B. SHUCK)<br>* Spalte 1, Zeile 30 - Spalte 3, Zeile 57; Figuren 1,3 *<br>--- | 1,2 | |
| A | DE-B-2 262 770  (HITACHI, LTD.)<br>* Spalte 3, Zeilen 30-46; Figur 1 *<br>--- | 1,2 | |
| A | DE-A-3 515 830  (K. GERCKEN)<br>* Seite 9, Zeile 21 - Seite 10, Zeile 25; Figur 1 *<br>--- | 1 | |
| A | US-A-3 294 148  (H.B. ALVARADO)<br>* Spalte 2, Zeile 22 - Spalte 5, Zeile 50, Figur 1 *<br>--- | 1 | RECHERCHIERTE SACHGEBIETE (Int. Cl.4) |
| A | DE-A-3 330 250  (FIAT AUTO S.P.A.)<br>* ganzes Dokument *<br>--- | 1 | F 02 M   5/00<br>F 02 M  31/00<br>F 02 M  37/00 |
| A | GB-A-1 385 443  (A.A. MALHERBE)<br>* Seite 3, Zeilen 103-124; Figur 4 *<br>--- | 1,2 | |
| A | FR-A-  499 893  (J.C. SKINNER)<br>* ganzes Dokument *<br>--- | 1,2 | |
| A | FR-A-  858 231  (M. THIBAUDEAU)<br>* ganzes Dokument *<br>----- | 1,2 | |

Der vorliegende Recherchenbericht wurde für alle Patentansprüche erstellt

| Recherchenort | Abschlußdatum der Recherche | Prüfer |
|---|---|---|
| BERLIN | 18-08-1988 | NORDSTROEM U.L.N. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, übereinstimmendes Dokument

EPO FORM 1503 03.82 (P0403)